# EUROPEAN PATENT SPECIFICATION

(11) **EP 1 723 036 B1**
(45) Date of publication and mention of the grant of the patent: **21.05.2008**
(21) Application number: 05708350.3
(22) Date of filing: 16.02.2005
(51) Int. Cl.: B65B 25/00, B65B 31/04, A23L 3/3418

(54) **METHOD OF PACKAGING FOODSTUFFS**
VERFAHREN ZUR VERPACKUNG VON LEBENSMITTELN
PROCEDE D'EMBALLAGE DE PRODUITS ALIMENTAIRES

(30) Priority: 16.02.2004 GB 0403365
(43) Date of publication of application: 22.11.2006
(73) Proprietor: Tilda Limited, Essex RM13 9YQ (GB)
(72) Inventor: PARRY, Kenneth c/o Tilda Limited, Essex RM13 9YQ (GB); WOOD, Lesley c/o Tilda Limited, Essex RM13 9YQ (GB); THAKRAR, Shilen c/o Tilda Limited, Essex RM13 9YQ (GB)
(74) Representative: Murnane, Graham John
(86) International application number: PCT/GB2005/000532
(87) International publication number: WO 2005/080205

(56) References cited:
- EP-A- 0 826 306
- CH-A5- 615 871
- DE-A1- 3 323 147
- GB-A- 552 842
- GB-A- 2 236 240
- GB-A- 2 330 816
- GB-A- 2 352 706
- US-A- 3 708 952
- US-B1- 6 199 601

## Description

The present invention relates to a method of packaging foodstuffs and particularly, but not exclusively, to a method of packaging cereal based foodstuffs within flexible-walled containers.

Modified Atmosphere Packaging (MAP) of food products in a variety of pack formats and materials is a longstanding technique used to reduce the atmospheric air, and in particular, oxygen content within a sealed pack. By reducing the oxygen content of a sealed pack, the shelf life of a product can be significantly increased by delaying the onset of oxidative rancidity, particularly in products containing oils.

The availability of gusseted plastics laminate and foil pouches with appropriate barrier properties has enabled the development of Pre-Cooked Ambient (PCA) products. Suitable pouches can (i) withstand conventional full sterilisation retort processes; (ii) retain very low oxygen and moisture permeability after the retort process; and (iii) in the case of plastics laminate pouches, allow foodstuffs to be reheated within their packaging in a microwave oven. Many foodstuffs such as rice, noodles, pasta, sauces and pet food containing small quantities of oil currently use MAP and consequently benefit from ambient shelf lives of 12-18 months or more.

The MAP process involves filling the pouches with a foodstuff and flushing the pouches with inert gases (such as nitrogen and carbon dioxide) to reduce their oxygen content. The inert gas or gas mixture inhibits proliferation of some micro-organisms (moulds and bacteria) with no significant chemical alteration of the product. The pouches are then mechanically squeezed to remove substantially all of the gas mixture and then sealed to achieve a residual oxygen content of typically below 2% and ideally below 1%. After sealing, the pouch is subjected to the full retort sterilisation process.

In the packaging of rice, noodles, pasta and related recipe products (an example of which is egg fried rice containing discrete pieces of scrambled egg and peas), the purging of gases from within a pouch during the MAP process results in the compression and agglomeration of the foodstuff. Using rice as an example, agglomeration of the separate grains means that the product suffers in a presentational sense. For example, rice grains often become broken and therefore unappealing to the consumer.

US_A_3708952 discloses a conventional MAP process.

According to the present invention there is provided a method of filling a flexible-walled container as defined in claim 1.

Preferably, the step of introducing a foodstuff into the container is preceded by deploying the container from a folded to an unfolded configuration.

Preferably, the step of deploying the container from a folded to an unfolded configuration is achieved by means of gas inflation.

Preferably, if the introduced foodstuff is substantially entirely solid in state, the step of purging substantially all oxygen from the interior of the container is initiated before the step of introducing the solid foodstuff into the container.

Alternatively, if the introduced foodstuff is substantially entirely solid in state, the steps of purging substantially all oxygen from the interior of the container and introducing the solid foodstuff into the container are performed concurrently.

Preferably, if the introduced foodstuff is substantially entirely liquid in state, the step of purging substantially all oxygen from the interior of the container is initiated after the step of introducing the liquid foodstuff into the container.

Preferably, if the step of introducing a foodstuff into the container involves the introduction of a substantially solid foodstuff followed by the introduction of a substantially liquid foodstuff, the step of purging substantially all oxygen from the interior of the container is ceased after the step of introducing the substantially solid foodstuff into the container.

Preferably, the inert gas is introduced into the container by gas introduction means whilst the flexible wall of the open end of the container is engaged tightly against the gas introduction means.

Preferably, the gas introduction means is a nozzle with a substantially flat opening.

Preferably, the selected volume is removed by mechanical squeezing of the flexible wall of the container.

Preferably, the container is sealed by means of heat sealing.

Preferably, the volume of inert gas remaining within the container is selected to reduce agglomeration of discrete pieces of foodstuff.

Preferably, the foodstuff is cereal based.

Preferably, the cereal is selected from the group consisting of rice, couscous, wild rice, barley, wheat, oats, rye, millet and maize.

Preferably, the flexible-walled container is a plastics pouch.

Preferably, the inert gas is selected from the group consisting of nitrogen, carbon dioxide, helium, argon, neon and xenon.

Preferably, oxygen gas forms less than 2% of the volume of gas within the container.

Most preferably, oxygen gas forms less than 1% of the volume of gas within the container.

Embodiments of the present invention will now be described, by way of example only, with reference to the following drawings in which:
Fig. 1 is a flow diagram showing the various steps in the packaging method of the present invention; and
Fig. 2 is a table showing comparative characteristics of conventional pouches filled using (i) a conventional filling method; and (ii) the filling method of the present invention.

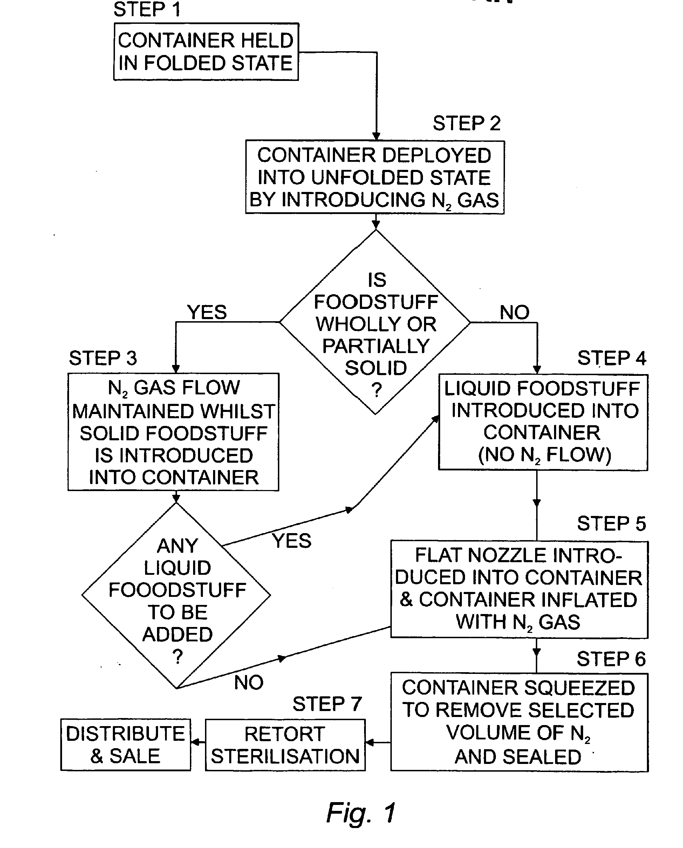

Fig. 1 outlines the various production line stages involved in implementing the method of filling pouches with a foodstuff.

Step 1: The first stage involves picking up and holding a gusseted pouch at its top corners in a conventional manner. Throughout the description, the terms 'pouch' and 'container' are interchangeable. At this stage, the gusset at the base of the pouch is in a folded state such that the whole pouch is in a substantially flat configuration.

Step 2: The second stage involves mechanically separating the walls of the unsealed end of the pouch by introducing a substantially flat nozzle between the walls of its open end. Nitrogen gas is then introduced between the walls to increase the pressure within the pouch and thus deploy the pouch from a substantially flat, folded configuration to an open unfolded configuration.

Step 3: In the case of solid foodstuffs (or a mixture of solids and liquids), these are introduced into the opened pouch whilst the flow of nitrogen gas is maintained. This step ensures that oxygen is flushed from the pouch before being trapped by the foodstuff.

Step 4: If the foodstuff is entirely liquid (that is, not wholly or partially solid) then no gas is introduced concurrently with the foodstuff.

Step 5: Once the foodstuff (whether solid or liquid or both) is introduced into the pouch, a flat nozzle is inserted into its unsealed end. The walls of the unsealed end are pulled tight against the nozzle, which then over-inflates the pouch with nitrogen gas. Once the pouch is inflated, the flat nozzle is removed from the pouch. It is to be understood that by over-inflate, it is meant that the pouch is inflated to a volume which is greater than the desired volume.

Step 6: The pouch is squeezed in a controlled manner thus removing a selected volume of nitrogen gas and reducing the overall volume of the pouch from its over-inflated level to a desired volume.

Step 7: The pouch then undergoes the full retort sterilisation process wherein pouches are transferred into a conventional overpressure retort and subjected to a thermal process (either static or rotational) designed to achieve commercial sterility appropriate to the nature of the contents (e.g. 6 minutes at 121°C for rice products). Retort temperatures must not exceed those specified by pouch manufacturers (normally 130°C).

Neither, either or both of steps 2 and 3 may be employed in combination with step 5 to achieve the required level of oxygen in the sealed pouch which will be dependent on the nature of its contents. Step 6 controls the final volume of the pouch.

Depending upon the nature of the pouch contents, either or both of steps 3 and 4 are employed.

The aforementioned steps of the filling method introduce the following important benefits and improvements. In view of the fact that the pouch is sealed whilst retaining a selected volume of nitrogen gas, the consumer's perception is that the partially inflated pouch looks less rigid, less processed and has an overall enhanced on-shelf appeal.

Moreover, in the conventional packaging process, pouches are squeezed to remove substantially all gas to reduce the volume of the pouches to that of their contents (i.e. vacuum packed). Accordingly, when emptying conventionally packaged pouches the contents are often lumpy and unappealing to the consumer. The consumer is compelled to squeeze the pouch during or subsequent to emptying its contents in order to break up and separate the agglomerated foodstuff. Indeed some packs now contain instructions to squeeze or break-up their contents before heating.

The partial inflation of the pouch achieved by the method of the present invention reduces agglomeration of its contents and promotes conditions wherein the foodstuff retains its original and familiar characteristics. For example, in the case of rice, the grains remain light, fluffy and separated. This is not only a consumer preference but it also results in easier pouring of the contents of the pouch.

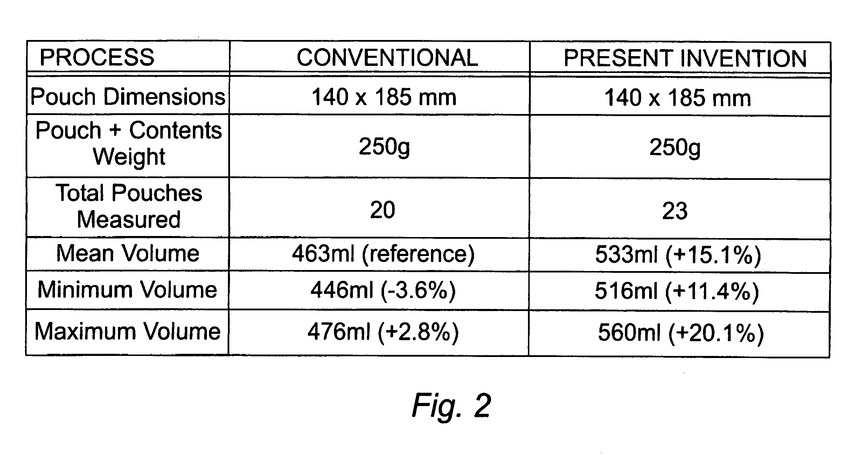

Fig. 2 demonstrates the increased volume of pouches packaged using the method of the present invention using the mean volume of a conventionally packaged pouch as a reference. As discussed previously, conventionally packaged pouches retain substantially no gas after they are sealed and their volume is therefore substantially equal to the volume of their contents.

The mean volume of pouches (of equal width/height and containing the same weight/type of foodstuff) filled by the packaging method of the present invention is, in the present non-limiting example shown in Fig. 2, at least 11.4% greater than that of conventionally packaged reference pouches.

Depending upon the nature of the foodstuff contained within the partially inflated pouch, the increase in volume over that of the reference is adapted to be at least 5%.

Such an increase in volume is beneficial in terms of reducing the pressure applied to the foodstuff by the walls of the container. Therefore, the likelihood of agglomeration of, for example, cereal grains during the retort sterilisation process and during storage, distribution and use is substantially reduced. Maintaining separate free flowing cereal grains is a critical quality parameter making the product more appealing to the consumer and is absent in foodstuffs made using conventional processes.

Modifications and improvements may be made without departing from the scope of the present invention. For example, the flexible walled container may be made from a non-microwavable foil-based material or from a material suitable for boil-in-bag cooking.

Although the inert gas is described above as being nitrogen, other inert gases such as carbon dioxide, helium, argon, neon and xenon could be used. Similarly, although the foodstuff has been described in the foregoing description as rice, the method is equally suitable for packaging other cereal based foodstuffs. For example, couscous, wild rice, barley, wheat, oats, rye, millet, maize etc.

Moreover, the method of filling the pouches may be performed either manually or by automated means.

## Claims

1. A method of filling a flexible-walled container comprising the steps of:
(i) purging substantially all oxygen from the interior of the container by introducing an inert gas;
(ii) introducing a foodstuff into the container;
(iii) over-inflating the container with inert gas beyond a desired volume;
(iv) subsequently removing a selected volume of the inert gas from the container to leave a selected volume of the inert gas remaining in the container; and
(v) sealing the container.

2. A method as claimed in claim 1, wherein the step of introducing a foodstuff into the container is preceded by deploying the container from a folded to an unfolded configuration.

3. A method as claimed in claim 2, wherein the step of deploying the container from a folded to an unfolded configuration is achieved by means of gas inflation.

4. A method as claimed in any of claims 1 to 3, wherein, if the introduced foodstuff is substantially entirely solid in state, the step of purging substantially all oxygen from the interior of the container is initiated before the step of introducing the solid foodstuff into the container.

5. A method as claimed in any of claims 1 to 3, wherein, if the introduced foodstuff is substantially entirely solid in state, the steps of purging substantially all oxygen from the interior of the container and introducing the solid foodstuff into the container are performed concurrently.

6. A method as claimed in any of claims 1 to 3, wherein, if the introduced foodstuff is substantially entirely liquid in state, the step of purging substantially all oxygen from the interior of the container is initiated after the step of introducing the liquid foodstuff into the container.

7. A method as claimed in any of claims 1 to 3, wherein, the step of introducing a foodstuff into the container involves the introduction of a substantially solid foodstuff followed by the introduction of a substantially liquid foodstuff; and wherein the step of purging substantially all oxygen from the interior of the container is ceased after the step of introducing the substantially solid foodstuff into the container.

8. A method as claimed in claim 1, wherein the inert gas is introduced into the container by gas introduction means whilst the flexible wall of the open end of the container is engaged tightly against the gas introduction means.

9. A method as claimed in claim 8, wherein the gas introduction means is a nozzle with a substantially flat opening.

10. A method as claimed in any preceding claim, wherein the selected volume is removed by mechanical squeezing of the flexible wall of the container.

11. A method as claimed in any preceding claim, wherein the container is sealed by means of heat sealing.

12. A method as claimed in any preceding claim, wherein the volume of inert gas remaining within the container is selected to reduce agglomeration of discrete pieces of foodstuff.

13. A method as claimed in any preceding claim, wherein the foodstuff is cereal based.

14. A method as claimed in claim 13, wherein the cereal is selected from the group consisting of rice, couscous, wild rice, barley, wheat, oats, rye, millet and maize.

15. A method as claimed in any preceding claim, wherein the flexible-walled container is a plastics pouch.

16. A method as claimed in any preceding claim, wherein the inert gas is selected from the group consisting of nitrogen, carbon dioxide, helium, argon, neon and xenon.

17. A method as claimed in any preceding claim, wherein oxygen gas forms less than 2% of the volume of gas within the container.

18. A method as claimed in any of claims 1 to 16, wherein oxygen gas forms less than 1% of the volume of gas within the container.

## Patentansprüche

1. Ein Verfahren zum Füllen eines Behälters mit biegsamen Wänden, das die folgenden Schritte beinhaltet:
(i) Abführen von im Wesentlichen sämtlichem Sauerstoff aus dem Inneren des Behälters durch Einführen eines Schutzgases;
(ii) Einführen eines Nahrungsmittels in den Behälter;
(iii) übertriebenes Aufblähen des Behälters mit Schutzgas über ein gewünschtes Volumen hinaus;
(iv) anschließendes Entfernen eines ausgewählten Volumens des Schutzgases aus dem Behälter, um ein ausgewähltes Volumen des Schutzgases, das in dem Behälter verbleibt, zurückzulassen; und
(v) Versiegeln des Behälters.

2. Verfahren gemäß Anspruch 1, wobei dem Schritt des Einführens eines Nahrungsmittels in den Behälter das Entfalten des Behälters aus einer gefalteten in eine aufgefaltete Konfiguration vorausgeht.

3. Verfahren gemäß Anspruch 2, wobei der Schritt des Entfaltens des Behälters aus einer gefalteten in eine aufgefaltete Konfiguration mittels Aufblähung mit Gas erreicht wird.

4. Verfahren gemäß einem der Ansprüche 1 bis 3, wobei, wenn das eingeführte Nahrungsmittel im Wesentlichen gänzlich im festen Zustand vorliegt, der Schritt des Abführens von im Wesentlichen sämtlichem Sauerstoff aus dem Inneren des Behälters vor dem Schritt des Einführens des festen Nahrungsmittels in den Behälter initiiert wird.

5. Verfahren gemäß einem der Ansprüche 1 bis 3, wobei, wenn das eingeführte Nahrungsmittel im Wesentlichen gänzlich im festen Zustand vorliegt, die Schritte des Abführens von im Wesentlichen sämtlichem Sauerstoff aus dem Inneren des Behälters und des Einführens des festen Nahrungsmittels in den Behälter gleichzeitig durchgeführt werden.

6. Verfahren gemäß einem der Ansprüche 1 bis 3, wobei, wenn das eingeführte Nahrungsmittel im Wesentlichen gänzlich- im flüssigen Zustand vorliegt, der Schritt des Abführens von im Wesentlichen sämtlichem Sauerstoff aus dem Inneren des Behälters nach dem Schritt des Einführens des flüssigen Nahrungsmittels in den Behälter initiiert wird.

7. Verfahren gemäß einem der Ansprüche 1 bis 3, wobei der Schritt des Einführens eines Nahrungsmittels in den Behälter die Einführung eines im Wesentlichen festen Nahrungsmittels gefolgt von der Einführung eines im Wesentlichen flüssigen Nahrungsmittels einbezieht; und wobei der Schritt des Abführens von im Wesentlichen sämtlichem Sauerstoff aus dem Inneren des Behälters nach dem Schritt des Einführens des im Wesentlichen festen Nahrungsmittels in den Behälter beendet wird.

8. Verfahren gemäß Anspruch 1, wobei das Schutzgas durch ein Gaseinführungsmittel in den Behälter eingeführt wird, während die biegsame Wand des offenen Endes des Behälters eng gegen das Gaseinführungsmittel in Eingriff genommen wird.

9. Verfahren gemäß Anspruch 8, wobei das Gaseinführungsmittel eine Düse mit einer im Wesentlichen flachen Öffnung ist.

10. Verfahren gemäß einem der vorhergehenden Ansprüche, wobei das ausgewählte Volumen durch das mechanische Zusammendrücken der biegsamen Wand des Behälters entfernt wird.

11. Verfahren gemäß einem der vorhergehenden Ansprüche, wobei der Behälter mittels Heißsiegeln versiegelt wird.

12. Verfahren gemäß einem der vorhergehenden Ansprüche, wobei das Volumen des Schutzgases, das innerhalb des Behälters verbleibt, ausgewählt ist, um die Zusammenballung von einzelnen Stücken von Nahrungsmittel zu reduzieren.

13. Verfahren gemäß einem der vorhergehenden Ansprüche, wobei das Nahrungsmittel auf Getreide basiert.

14. Verfahren gemäß Anspruch 13, wobei das Getreide aus der Gruppe ausgewählt ist, bestehend aus Reis, Couscous, Wildreis, Gerste, Weizen, Hafer, Roggen, Hirse und Mais.

15. Verfahren gemäß einem der vorhergehenden Ansprüche, wobei der Behälter mit biegsamer Wand ein Kunststoffbeutel ist.

16. Verfahren gemäß einem der vorhergehenden Ansprüche, wobei das Schutzgas aus der Gruppe ausgewählt ist, bestehend aus Stickstoff, Kohlendioxid, Helium, Argon, Neon und Xenon.

17. Verfahren gemäß einem der vorhergehenden Ansprüche, wobei Sauerstoffgas weniger als 2 % des Gasvolumens innerhalb des Behälters ausmacht.

18. Verfahren gemäß einem der Ansprüche 1 bis 16, wobei Sauerstoffgas weniger als 1 % des Gasvolumens innerhalb des Behälters ausmacht.

## Revendications

1. Un procédé de remplissage d'un contenant à paroi flexible comprenant les étapes consistant à :
(i) purger substantiellement tout l'oxygène à l'intérieur du contenant en introduisant un gaz inerte ;
(ii) introduire un produit alimentaire dans le contenant ;
(iii) surgonfler le contenant avec du gaz inerte au-delà d'un volume souhaité ;
(iv) retirer par la suite du contenant un volume sélectionné du gaz inerte afin de laisser un volume sélectionné restant de ce gaz inerte dans le contenant ; et
(v) fermer hermétiquement le contenant.

2. Un procédé tel que revendiqué dans la revendication 1, dans lequel l'étape consistant à introduire un produit alimentaire dans le contenant est précédée par le déploiement du contenant d'une configuration pliée à une configuration dépliée.

3. Un procédé tel que revendiqué dans la revendication 2, dans lequel l'étape consistant à déployer le contenant d'une configuration pliée à une configuration dépliée est réalisée au moyen d'un gonflement au gaz.

4. Un procédé tel que revendiqué dans n'importe lesquelles des revendications 1 à 3, dans lequel, si le produit alimentaire introduit est d'état substantiellement entièrement solide, l'étape consistant à purger substantiellement tout l'oxygène à l'intérieur du contenant est entreprise avant l'étape consistant à introduire le produit alimentaire solide dans le contenant.

5. Un procédé tel que revendiqué dans n'importe lesquelles des revendications 1 à 3, dans lequel, si le produit alimentaire introduit est d'état substantiellement entièrement solide, les étapes consistant à purger substantiellement tout l'oxygène à l'intérieur du contenant et à introduire le produit alimentaire solide dans le contenant sont effectuées simultanément.

6. Un procédé tel que revendiqué dans n'importe lesquelles des revendications 1 à 3, dans lequel, si le produit alimentaire introduit est d'état substantiellement entièrement liquide, l'étape consistant à purger substantiellement tout l'oxygène à l'intérieur du contenant est entreprise après l'étape consistant à introduire le produit alimentaire liquide dans le contenant.

7. Un procédé tel que revendiqué dans n'importe lesquelles des revendications 1 à 3, dans lequel l'étape consistant à introduire un produit alimentaire dans le contenant implique l'introduction d'un produit alimentaire substantiellement solide suivie de l'introduction d'un produit alimentaire substantiellement liquide ; et dans lequel l'étape consistant à purger substantiellement tout l'oxygène à l'intérieur du contenant est arrêtée après l'étape consistant à introduire le produit alimentaire substantiellement solide dans le contenant.

8. Un procédé tel que revendiqué dans la revendication 1, dans lequel le gaz inerte est introduit dans le contenant grâce à un moyen d'introduction de gaz tandis que la paroi flexible de l'extrémité ouverte du contenant est en prise de façon étanche contre le moyen d'introduction de gaz.

9. Un procédé tel que revendiqué dans la revendication 8, dans lequel le moyen d'introduction de gaz est une buse à orifice substantiellement plat.

10. Un procédé tel que revendiqué dans n'importe quelle revendication précédente, dans lequel le volume sélectionné est retiré en exerçant une pression mécanique sur la paroi flexible du contenant.

11. Un procédé tel que revendiqué dans n'importe quelle revendication précédente, dans lequel le contenant est fermé hermétiquement par thermosoudage.

12. Un procédé tel que revendiqué dans n'importe quelle revendication précédente, dans lequel le volume restant de gaz inerte à l'intérieur du contenant est sélectionné pour réduire l'agglomération de morceaux distincts de produit alimentaire.

13. Un procédé tel que revendiqué dans n'importe quelle revendication précédente, dans lequel le produit alimentaire est à base de céréale.

14. Un procédé tel que revendiqué dans la revendication 13, dans lequel la céréale est sélectionnée dans le groupe consistant en riz, couscous, riz sauvage, orge, blé, avoine, seigle, millet et maïs.

15. Un procédé tel que revendiqué dans n'importe quelle revendication précédente, dans lequel le contenant à paroi flexible est un sachet en plastique.

16. Un procédé tel que revendiqué dans n'importe quelle revendication précédente, dans lequel le gaz inerte est sélectionné dans le groupe consistant en azote, dioxyde de carbone, hélium, argon, néon et xénon.

17. Un procédé tel que revendiqué dans n'importe quelle revendication précédente, dans lequel le gaz oxygène forme moins de 2 % du volume de gaz à l'intérieur du contenant.

18. Un procédé tel que revendiqué dans n'importe lesquelles des revendications 1 à 16, dans lequel le gaz oxygène forme moins de 1 % du volume de gaz à l'intérieur du contenant.
